Europäisches Patentamt

**European Patent Office**

**Office européen des brevets**

(11) Publication number: **0 350 480 B1**

# EUROPEAN PATENT SPECIFICATION

(45) Date of publication of patent specification: **07.01.93**

(51) Int. Cl.5: **A23K 1/16, A23K 1/00**

(21) Application number: **87907976.2**

(22) Date of filing: **02.12.87**

(86) International application number:
**PCT/HU87/00052**

(87) International publication number:
**WO 89/05100 (15.06.89 89/13)**

(54) **VITAMIN U AND METHOD OF TREATMENT OF ANIMALS WITH VITAMIN U.**

(43) Date of publication of application:
**17.01.90 Bulletin 90/03**

(45) Publication of the grant of the patent:
**07.01.93 Bulletin 93/01**

(84) Designated Contracting States:
**AT BE CH DE FR GB IT LI LU NL SE**

(56) References cited:
**EP-A- 0 130 281**
**AT-B- 290 969**
**AT-B- 334 186**
**CH-A- 594 367**
**CH-A- 653 864**

**Chemical Abstracts, vol. 101, no. 13, issued
1984, September 34 (Colombus, Ohio, USA),
M. Hegedus, J. Bokori, J. Tamas,
"Esophagogastric ulcer in swine and vitamin
U. II. Nature of vitamin U.", see page 597,
column 1, abstract no. 129225k, Acta Vet.
Hung. 1983, 31(4), 155-63**

(73) Proprietor: **REANAL FINOMVEGYSZERGYAR**
**P.O. Box 54 Telepes u. 53**
**H-1441 Budapest(HU)**

(72) Inventor: **Pribek, Ferenc**
**Gogol u. 22**
**H-1133 Budapest(HU)**
Inventor: **HEGEDÜS, Mihály**
**Szeréna u. 31**
**H-1025 Budapest(HU)**
Inventor: **TAMAS, Jozsef**
**Szabadság tér 1**
**H-1029 Budapest(HU)**
Inventor: **ZSIGMOND, Lászl**
**Kassai u. 153**
**H-1142 Budapest(HU)**
Inventor: **SZAKCS, Laszlo**
**H sök tere 4**
**H-6230 Soltvadkert(HU)**
Inventor: **SZAB , Etelka**
**Tamás u. 4**
**H-6200 Kiskörös(HU)**

Rank Xerox (UK) Business Services

**Lebensmittellexikon, 2. Auflage 1981, page 557**

(74) Representative: **Kupecz, Arpad et al Octrooibureau Los en Stigter B.V. Postbox 20052 NL-1000 HB Amsterdam(NL)**

**Description**

The invention relates to

- a method of treatment of meat-producing animals primarily for increasing their fodder utilization and body weight gain;
- a method of treatment of poultries primarily for increasing their fodder utilization, egg production, egg shell strength and hatching ability, and
- a method of treatment of fur animals primarily for increasing their fur production and the quality of fur.

The invention also relates to vitamin U coated with at least 10% by weight of a hydrocarbon or hydrocarbon derivative with at least 10 carbon atoms.

Vitamin U (S-methyl-methionine) is a substance widely used in the human therapy primarily for the prevention and healing of gastric ulcers, furthermore as a lipotropic, anti-histaminic and antiserotonine agent for the prevention of hepatic disorders (Bukin, V., Anishimov, V.E. "Vitamin U", Ishdatelstvo Nauka, Moscow, 1973; Arzneimittel Forsch. 10, 23-28).

Vitamin U has also been utilized as a veterinary agent for the prevention and healing of oesophagogastric ulcers in pigs (Acta Veterinaria Hungarica 31, 155-163 /1983/).

Now it has been found that vitamin U exerts a range of beneficial effects on various animals, including meat-producing animals (such as pigs, ruminants, horses,etc.), poultries (such as chickens, geese, ducks, etc.) and fur animals (such as rabbits, foxes, goats, lambs, nutrias, etc.). Consequently, vitamin U can be applied not only in the field of veterinary (i.e. to prevent or heal certain disorders of the animal organism) but in the routine animal husbandry, too.

When administered to meat-producing animals either as a fodder component or dissolved in drinking water, vitamin U markedly increases the fodder utilization and body weight gain of the treated animals. This means that a pre-determined body weight can be reached within a shorter period of time and the specific fodder consumption (consumed fodder : body weight gain) is lowered as well. As an additional advantage, vitamin U exerts appetizing, liver protecting, epithelium recovering and antiphlogistic effects on the animals, which result in the production of a more healthy, strong and viable population less liable to infestation. This is of primary advantage when treating pregnant animals. According to our experiences these beneficial effects can be attained by treating the animals with a feed comprising 50 to 300 ppm of vitamin U.

When administered to poultries, vitamin U increases primarily the fodder utilization and egg production of the treated animals. Vitamin U exerts beneficial effects on egg quality as well, since eggs with stronger shell are produced. The hatching ability of eggs increases, too, which means that the ratio of non-fertile or otherwise injured eggs unable of hatching decreases. According to our experiences these beneficial effects can be attained by treating the poultries with a feed comprising 100 to 350 ppm of vitamin U.

When administered to fur animals, increased fur production and improved fur quality can be attained. The rate of fur production increases upon the effect of vitamin U, too, which means that the moulting period shortens or the fleece reaches the quality required for shearing within a shorter period of time. On animals breeded both for meat and fur production (e.g. lambs, goats and rabbits) vitamin U increases the fodder utilization and body weight gain as well. Upon treatment with vitamin U the animals get more calm, which is a very important advantage in the breeding of wild fur animals, such as foxes and nutrias. On females, vitamin U increases the conceptive ability and fertility rate, and the fertility cycle gets more even within a treated population. These beneficial effects can be attained by treating the animals with a feed comprising 100 to 350 ppm of vitamin U.

It has also been observed that vitamin U, when coated with a hydrocarbon or hydrocarbon derivative with at least 10 carbon atoms, is less liable to premature decomposition in the animal organism. This can be utilized particularly on ruminants, where the rumen microorganisms tend to decompose vitamin U. When coated with at least 10 % by weight of a hydrocarbon or hydrocarbon derivative with at least 10 carbon atoms, this premature decomposition of vitamin U can be avoided, and the total amount of vitamin U can be resorbed in the animal organism.

Based on the above, the invention relates to a method of treatment of

(i) meat-producing animals primarily for increasing their fodder utilization and body weight gain,

(ii) poultries primarily for increasing their fodder utilization and egg production and for improving egg quality, or

(iii) fur animals primarily for increasing their fur production and for improving fur quality.

According to the method of the invention

(i) meat-producing animals are treated with a feed comprising 50 to 300 ppm of vitamin U either as such or coated with at least 10 % by weight of a hydrocarbon or hydrocarbon derivative, with at least 10 carbon atoms,

3

EP 0 350 480 B1

(ii) poultries are treated with a feed comprising 100 to 350 ppm of vitamin U either as such or coated with at least 10 % by weight of a hydrocarbon or hydrocarbon derivative with at least 10 carbon atoms, or

(iii) fur animals are treated with a feed comprising 100 to 350 ppm of vitamin U either as such or coated with at least 10 % by weight of a hydrocarbon or hydrocarbon derivative with at least 10 carbon atoms.

The invention also relates to vitamin U coated with at least 10 % by weight of a hydrocarbon or hydrocarbon derivative with at least 10 carbon atoms, furthermore to a process for the preparation of vitamin U in this coated form.

The term "feed" as used in the specification and claims includes any solid or liquid substance applied in the feeding of animals either directly or after admixing it with other additives. This term includes solid fodders ready for use, drinking water, lick stones, and premixes for these compositions.

Feeds for direct feeding comprise 100 to 350 ppm (for meat-producing animals 50 to 300 ppm) of vitamin U, optionally in coated form. The vitamin U content of premixes varies according to the ratio to be diluted with other food components. Such premixes contain generally 1 to 30 % by weight of vitamin U.

The components of feeds other than vitamin U are conventional and well known to one skilled in the art. Certain food compositions are described in the examples.

As hydrocarbons or hydrocarbon derivatives with at least 10 carbon atoms to be used for coating vitamin U e.g. paraffins, waxes, long chain fatty acids, long chain fatty acid esters, etc, can be applied. The upper limit of carbon atom number has no decisive role. Vitamin U, when coated, should contain at least 10 % by weight of the coating agent. Again, the upper limit of the coating agent content has no decisive role and depends primarily on economical considerations. In practice vitamin U is admixed with the coating agent in a weight ratio of 1 to (0.5-1.5).

The coating agent is applied onto the surface of vitamin U particles in a manner known per so, e.g. by admixing ground vitamin U with the coating agent or by spraying the coating agent onto the surface of vitamin U.

The invention is elucidated in detail by the aid of the following Examples.

Example 1

Preparation of coated vitamin U

50 kg of vitamin U and 40 kg of ground dicalcium phosphate were added to 40 kg of molten stearic acid at 80°C. The mixture was homogenized at 80°C for 10 minutes, then cooled and comminuted to a particle size of 0.1 to 0.4 mm. The resulting granular product was added to 20 kg of molten stearic acid, the mixture was kneaded, then cooled and comminuted.

Stearic acid can be replaced by the same amount of wax or paraffin, calcium phosphate can be replaced by the same amount of zeolite or another clay mineral.

Example 2

Premix for cattle fodder

A premix for cattle fodder was prepared by homogenizing the following substances:

| | |
|---|---|
| vitamin A | 3 000 000 IU |
| vitamin $D_3$ | 300 000 IU |
| antioxidant | 30 000 mg |
| vitamin U (coated as described in Example 1) | 300 000 mg |
| mineral premix (comprising Mn, Cu, Zn, I, Co, Mg) | 60 000 mg |
| carrier (ground corn) | q.s. ad   1 000 g |

When utilized for feeding cattles, the above premix was admixed with chopped corn stalk in a weight ratio of 0.5 : 99.5.

Example 3

Tests performed on cattles

4

The tests were performed on 14 bull calves each weighing 180 kg in average. 7 of the calves were fed with a cattle fodder of conventional composition supplemented with 20 ppm of vitamin U (uncoated), whereas the remaining 7 calves, which served as controls, did not receive vitamin U in the fodder of otherwise the same composition. The calves were fattened until they reached an average body weight of 550 kg. All of the animals received fodder in the same daily amounts.

In the group treated with vitamin U the animals reached the pre-determined body weight of 550 kg within 9 months, which corresponds to an average daily weight gain of 1400 g. The animals of the control group reached a body weight of 542 kg in average within 10 months, which corresponds to a daily weight gain of 1210 g in average. Thus the daily average weight gain of the animals increased by 15 % upon the treatment. The amount of fodder required to attain the same weight gain decreased by 10 %.

Example 4

Premix for pig fodder

A premix for pig fodder was prepared by homogenizing the following substances:

| | |
|---|---|
| vitamin A | 366 300.00 IU |
| vitamin $D_3$ | 54 945.00 IU |
| vitamin E | 347.00 IU |
| vitamin $K_3$ | 124.80 mg |
| vitamin $B_2$ | 137.20 mg |
| vitamin $B_3$ | 499.50 mg |
| vitamin $B_{12}$ | 0.52 mg |
| nicotinic acid | 999.00 mg |
| antioxidant | 124.80 mg |
| choline chloride | 9 999.00 mg |
| vitamin U | 9 999.00 mg |
| saccharin (sodium salt) | 3 300.00 mg |
| mineral premix (comprising Zn, I, Se, Mn, Cu, Fe, Co) | 9 378.57 mg |
| L-lysine | 1.66 % |
| phosphorous source | 5.28 % |
| calcium source | 18.94 % |
| nutrient salt | 3.23 % |

When utilized for feeding pigs, the above premix was admixed with a basal pig fodder of conventional composition in a weight ratio of 3:97.

Example 5

Tests performed on pigs

The animals were divided into two groups. The pigs of the control group did not receive vitamin U, whereas those belonging to the treated group received a fodder with a vitamin U content indicated below. Apart from this difference the composition of the fodder and the conditions of fattening were the same in both groups.

Test A:

The treated group consisted of 276 animals, whereas the control group consisted of 515 animals. The animals were fattened until they reached an average body weight of 105 kg. From the 60th day of their life, the animals belonging to the treated group received a fodder supplemented with 100 ppm of vitamin U.
The following results were obtained:

| | |
|---|---|
| Mortality: | lower by 2.8 % than that observed in the control group |
| Specific fodder consumption: | lower by 18.2 % than that observed in the control group |
| Average daily body weight gain: | greater by 6.7 % than that observed in the control group |
| Fattening period: | shorter by 13.3 days than that of the control group |

Test B:

The treated group consisted of 473 animals, whereas the control group consisted of 580 animals. The animals were fattened until they reached an average body weight of 105 kg. From the 12th day of their life, the animals belonging to the treated group received a fodder supplemented with 50 ppm of vitamin U; the amount of vitamin U was raised to 100 ppm from the 30th day.

The following results were obtained:

| | |
|---|---|
| Mortality: | lower by 7.0 % than that observed in the control group |
| Specific fodder consumption: | lower by 6.1 % than that observed in the control group |
| Average daily body weight gain: | greater by 9.8 % than that observed in the control group |
| Fattening period: | shorter by 18.6 days than in the control group |

Test C:

The treated group consisted of 177 animals, whereas the control group consisted of 184 animals. The animals were fattened until they reached an average body weight of 105 kg. From the 12th day of their life, the animals belonging to the treated group received a fodder supplemented with 50 ppm of vitamin U; the amount of vitamin U was raised to 100 ppm from the 42nd day and to 150 ppm from the 80th day.

The following results were obtained:

| | |
|---|---|
| Mortality: | lower by 6.8 % than that observed in the control group |
| Specific fodder consumption: | lower by 8.7 % than that observed in the control group |
| Average daily body weight gain: | greater by 2.9 % than that observed in the control group |
| Fattening period: | shorter by 6.6 days than that of the control group |

Test D:

The treated group consisted of 1107 animals, whereas the control group consisted of 1241 animals. The animals were fattened until they reached an average body weight of 105 kg. From the 12th day of their life, the animals belonging to the treated group received a fodder supplemented with 50 ppm of vitamin U; the amount of vitamin U was raised to 150 ppm from the 40th day and to 200 ppm from the 90th day.

The following results were obtained:

| | |
|---|---|
| Mortality: | lower by 4.5 % than that observed in the control group |
| Specific fodder consumption: | lower by 5.6 % than that observed in the control group |
| Average daily body weight gain: | greater by 5.8 % than that observed in the control group |
| Fattening period: | shorter by 13.2 days than that of the control group |

Test E:

The treated group consisted of 606 animals, whereas the control group consisted of 607 animals. The animals were fattened until they reached an average body weight of 105 kg. From the 30th day of their life, the animals belonging to the treated group received a feed supplemented with 200 ppm of vitamin U.

The following results were obtained:

| | |
|---|---|
| Mortality: | lower by 1.6 % than that observed in the control group |
| Specific fodder consumption: | lower by 5.7 % than that observed in the control group |
| Average daily body weight gain: | greater by 12.4 % than that observed in the control group |
| Fattening period: | shorter by 14.9 days than that of the control group |

Test F:

The treated group consisted of 265 animals, whereas the control group consisted of 282 animals. The animals were fattened until they reached an average body weight of 105 kg. From the 28th day of their life, the animals belonging to the treated group received a fodder supplemented with 200 ppm of vitamin U.

The following results were obtained:

| | |
|---|---|
| Mortality: | lower by 5.3 % than that observed in the control group |
| Specific fodder consumption: | lower by 18.8 % than that observed in the control group |
| Average daily body weight gain: | greater by 5.7 % than that observed in the control group |
| Fattening period: | shorter by 12.1 days than that of the control group |

Test G:

The treated group consisted of 263 animals, whereas the control group consisted of 273 animals. The animals were fattened until they reached an average body weight of 105 kg. From the 28th day of their life, the animals belonging to the treated group received a fodder supplemented with 200 ppm of vitamin U.

The following results were obtained:

| | |
|---|---|
| Mortality: | lower by 3.1 % than that observed in the control group |
| Specific fodder consumption: | lower by 19.5 % than that observed in the control group |
| Average daily body weight gain: | greater by 15.3 % than that observed in the control group |
| Fattening period: | shorter by 6.2 days than that of the control group |

Example 6

Premix for drinking water

A premix for drinking water was prepared by dissolving the following components in one litre of water:

| | |
|---|---|
| vitamin A | 15 000 000 IU |
| vitamin D$_3$ | 1 500 000 IU |
| vitamin E | 30 g |
| thiamine | 2 g |
| riboflavine | 5 g |
| vitamin B$_6$ | 3 g |
| vitamin B$_{12}$ | 20 mg |
| panthothenic acid | 15 g |
| niacin | 20 g |
| biothine | 50 mg |
| vitamin U | 50 g |
| water | q.s. ad   1 litre |

Prior to use, the above solution was diluted with water to a vitamin U content of 50 to 150 ppm. This dilute composition can be used as drinking water for pigs, chickens, turkeys, ducks and lambs.

Example 7

Tests performed on ducks

Ducks were fed with a fodder of the following composition:

| | |
|---|---|
| corn | 36.0 w/w % |
| wheat | 29.0 " |
| alfalfa meal | 4.0 " |
| bran | 5.0 " |
| extracted soybean grits (dry substance: 47 %) | 9.0 " |
| extracted sunflower grits (dry substance: 40 %) | 35.0 " |
| fish meal (dry substance: 70 %) | 2.5 " |
| mixed animal protein meal (dry substance: 50 %) | 2.0 " |
| complete poultry premix (comprising minerals and vitamins) | 9.0 " |

In the treated group 300 ppm of vitamin U was also added to the above fodder.

The tests were performed on 2900 duck hens, 1700 of them belonging to the treated group and 1200 of them serving as controls. In both group the amimals were maintained under strictly the same conditions. The tests were performed for 7 months, and mortality, egg production and egg quality were recorded. The following results were obtained:

| | |
|---|---|
| Mortality: | lower by 14 % than that observed in the control group |
| Egg production (for one duck): | higher by 5 % than that observed in the control group |
| Number of viable hatched ducks (calculated for one hen): | higher by 13.2 % than that observed in the control group |
| Egg shell strength: | of the eggs laid by the treated animals only 5 % were hair-cracked, whereas this number was 24 % in the control group |
| Fodder consumption (calculated for one egg): | lower by 7.1 % than that observed in the control group |

Example 8

Tests performed on brood-hens

The tests were performed on 50,000 brood-hens, 25,000 of them belonging to the treated group and the other 25,000 serving as controls. A premix of the composition described in Example 6 was diluted with water to a vitamin U content of 150 ppm, and this solution was applied as drinking water in the treated group. The control group received a solution of the same composition but containing no vitamin U as drinking water. In a 40 days' test period the egg production increased by 68 % in the treated group.

Example 9

Tests performed on broiler chickens

The tests were performed on 76,900 young broiler chickens, 25,600 of them belonging to the treated group and the remainder serving as controls. From the 2nd day of their life, the animals were treated with a basal chicken fodder of the same composition, the only difference being that vitamin U, in an amount of 300 ppm, was also admixed to the fodder of the treated animals. After a 40 days' test period the specific fodder consumption of the treated group was less by 7 % than that observed in the control group.

Example 10

Tests performed on Angora rabbits

Angora rabbits were fed with a fodder of the following composition:

| | |
|---|---|
| barley | 30 w/w % |
| bran | 22 " |
| sunflower grits | 20 " |
| soybean grits (dry substance: 48 %) | 3 " |
| meat flour (dry substance: 62 %) | 5 " |
| alfalfa meal | 18 " |
| complete rabbit premix (comprising minerals and vitamins) | 2 " |

In the treated group 200 ppm of vitamin U was also added to the above fodder. The animals were treated with vitamin U only in the fur-producing cycle.

The rate of fur production increased upon the effect of vitamin U. The animals belonging to the treated group could be sheared after 65 days, i.e. 5 days earlier than the controls, and the specific fur production was higher by 20 % than that observed in the control group. The quality of fur improved as well; the ratio of first class fur increased by 15 % in the treated group.

During this period the fertility rate raised from 40 % to 65 %.

Example 11

Tests performed on Arctic foxes

Arctic foxes were fed with a fodder of the following composition:

| | |
|---|---|
| chicken meat paste | 28 w/w % |
| chicken back and hindquarters | 20 " |
| beef | 8 " |
| boiled pig blood | 10 " |
| boiled egg | 5 " |
| lamb liver, lung and spleen | 10 " |

| | |
|---|---|
| boiled wheat grits | 3 w/w % |
| boiled barley grits | 2 " |
| wheat germ | 2 " |
| apple | 5 " |
| carrot | 5 " |
| premix for carnivores (comprising minerals and vitamins) | 1 " |

In the treated group 200 ppm of vitamin U was also added to the above fodder. The treatment with vitamin U started 2 weeks before the fur-producing cycle and lasted until the end of moulting.

Upon the treatment with vitamin U the moulting period shortened by 4-6 days, and the amount of fur produced increased by 10-15 % in relation to the controls. Furthermore, more shiny, tight and attractive furs were obtained in the treated group.

In the period of treatment the animals got more calm, and the fertility ratio increased by 40 %.

## Claims

1. A method of treatment of meat-producing animals primarily for increasing their fodder utilization and body weight gain, **characterized** in that the animals are treated with a feed comprising 50 to 300 ppm of vitamin U either as such or coated with at least 10% by weight of a hydrocarbon or hydrocarbon derivative with at least 10 carbon atoms.

2. A method of treatment of poultries primarily for increasing their fodder utilization and egg production and improving egg quality, **characterized** in that the animals are treated with a feed comprising 100 to 350 ppm of vitamin U either as such or coated with at least 10% by weight of a hydrocarbon or hydrocarbon derivative with at least 10 carbon atoms.

3. A method of treatment of fur animals primarily for increasing their fur production and improving fur quality, **characterized** in that the animals are treated with a feed according to claim 2 comprising 100 to 350 ppm of vitamin U either as such or coated with at least 10% by weight of a hydrocarbon or hydrocarbon derivative with at least 10 carbon atoms.

4. Vitamin U coated with at least 10% by weight of a hydrocarbon or hydrocarbon derivative with at least 10 carbon atoms.

## Patentansprüche

1. Verfahren zur Behandlung von fleischproduzierenden Tieren, insbesondere zur Erhöhung ihrer Futterverwertung und ihres Körpergewichtszuwachses, dadurch gekennzeichnet, daß die Tiere mit einem Futtermittel mit einem Gehalt an 50 bis 300 ppm Vitamin U behandelt werden, das entweder als solches oder mit einer Beschichtung mit mindestens 10 Gew.-% eines Kohlenwasserstoffs oder eines Kohlenwasserstoffderivats mit mindestens 10 Kohlenstoffatomen eingesetzt wird.

2. Verfahren zur Behandlung von Geflügel, insbesondere zur Erhöhung seiner Futterverwertung und seiner Eierproduktion und zur Verbesserung der Eierqualität, dadurch gekennzeichnet, daß die Tiere mit einem Futtermittel mit einem Gehalt an 100 bis 350 ppm Vitamin U behandelt werden, das entweder als solches oder mit einer Beschichtung mit mindestens 10 Gew.-% eines Kohlenwasserstoffs oder eines Kohlenwasserstoffderivats mit mindestens 10 Kohlenstoffatomen eingesetzt wird.

3. Verfahren zur Behandlung von Pelztieren, vorwiegend zur Erhöhung ihrer Pelzproduktion und zur Verbesserung der Pelzqualität, dadurch gekennzeichnet, daß die Tiere mit einem Futtermittel nach Anspruch 2 mit einem Gehalt an 100 bis 350 ppm Vitamin U behandelt werden, das entweder als solches oder mit einer Beschichtung mit mindestens 10 Gew.-% eines Kohlenwasserstoffs oder eines Kohlenwasserstoffderivats mit mindestens 10 Kohlenstoffatomen eingesetzt wird.

4. Vitamin U mit einer Beschichtung mit mindestens 10 Gew.-% eines Kohlenwaserstoffs oder Kohlenwasserstoffderivats mit mindestens 10 Kohlenstoffatomen.

**Revendications**

1. Procédé de traitement d'animaux producteurs de viande principalement pour augmenter l'utilisation de l'alimentation et la prise de poids corporel de ceux-ci, caractérisé en ce que les animaux sont traités avec un aliment comprenant 50 à 300 ppm de vitamine U, soit telle que, soit revêtue d'au moins 10% en poids d'un hydrocarbure ou d'un dérivé hydrocarboné ayant au moins 10 atomes de carbone.

2. Procédé de traitement de la volaille principalement pour augmenter l'utilisation de l'alimentation et la production d'oeufs et améliorer la qualité des oeufs de celle-ci, caractérisé en ce que les animaux sont traités avec un aiment comprenant 100 à 350 ppm de vitamine U, soit telle que, soit revêtue d'au moins 10% en poids d'un hydrocarbure ou d'un dérivé hydrocarboné ayant au moins 10 atomes de carbone.

3. Procédé de traitement d'animaux à fourrure principalement pour augmenter la production de fourrure et améliorer la qualité des fourrures de ceux-ci, caractérisé en ce que les animaux sont traités avec un aiment suivant la revendication 2 comprenant 100 à 350 ppm de vitamine U, soit telle que, soit revêtue d'au moins 10% en poids d'un hydrocarbure ou d'un dérivé hydrocarboné ayant au moins 10 atomes de carbone.

4. Vitamine U revêtue d'au moins 10% en poids d'un hydrocarbure ou d'un dérivé hydrocarboné ayant au moins 10 atomes de carbone.